# EUROPEAN PATENT SPECIFICATION

(11) **EP 1 936 417 B1**
(45) Date of publication and mention of the grant of the patent: **27.02.2013**
(21) Application number: 07024594.9
(22) Date of filing: 19.12.2007
(51) Int. Cl.: G02B 6/44

(54) **Optical fibre unit, optical cable and method for manufacturing the same**
Glasfasereinheit und Herstellungsverfahren dafür
Unité à fibre optique, câble optique et son procédé de fabrication

(30) Priority: 21.12.2006 NL 1033101
(43) Date of publication of application: 25.06.2008
(73) Proprietor: Draka Comteq B.V., 1083 HJ Amsterdam (NL)
(72) Inventor: Nothofer, Klaus, 40699 Erkrath (DE); Huijsman, Dick, 9945 RX Wagenborgen (NL); Berkers, Arnoldus Gertrudis Wilhelmus, 9903 EE Appingedam (NL)
(74) Representative: Blokland, Arie

(56) References cited:
- EP-A- 0 838 703
- EP-A- 0 969 301
- EP-A- 1 396 745
- EP-A1- 0 296 836
- EP-A1- 0 482 703
- EP-A1- 0 527 266
- EP-A1- 1 160 607
- EP-A1- 2 069 844
- WO-A-2004/079424
- WO-A-2006/025645
- FR-A1- 2 447 561
- FR-A1- 2 559 592
- GB-A- 2 215 480
- JP-A- 59 009 601
- US-A- 5 243 675
- US-A1- 2002 168 520
- US-A1- 2004 214 943
- US-A1- 2005 244 113
- US-A1- 2008 279 514

## Description

The present invention relates to an optical fibre unit comprising at least one optical fibre, which optical fibre is provided with a protective coating, and an anti-adhesive coating which surrounds the protective coating and which is at least partially bonded thereto, which anti-adhesive coating is surrounded by a buffer tube. The present invention also relates to an optical cable comprising one or more of the aforesaid optical fibre units. The present invention further relates to a method for manufacturing an optical fibre unit.

An optical fibre unit is known per se from US patent No. 6,858,184 in the name of the present applicant. The module that is known therefrom comprises a plurality of optical fibres surrounded by a so-called flexible tube, which flexible tube is also referred to as a "skin". The gaps between the optical fibres in the flexible tube are generally occupied by a hydrophobic gel. Such a hydrophobic gel inter alia functions to form a barrier against the ingress of moisture. Said gel furthermore functions to prevent damage to the optical fibre itself, and in particular to the protective coating that surrounds the optical fibre, upon gaining access to the optical fibre. A drawback of the use of a gel-like material is that the gel material will flow out of the cables during the installation of such optical modules, so that additional cleaning operations are required. In addition, the personnel involved in the installation of such cables experience contact with gel material during work as unpleasant.

US patent application 2005/0 244 113 relates to a buffered optical waveguide comprising:
an optical waveguide, the optical waveguide having a core, a cladding, and at least one coating;
a buffer layer, the buffer layer being disposed about the optical waveguide, the buffer layer at least being partially formed from a foamed polymer; and
at least one filament being disposed adjacent to the optical waveguide for reducing the contact area of the buffer layer.

Japanese patent application JP 59-009 601 relates to a coated optical fiber wherein a primary covering layer is provided on an outer periphery of an optical fiber, a buffer layer swollen partly or fully in the radial direction is provided on the outer periphery thereof, and a polymer material reinforcing covering is provided on the outer periphery thereof.

European patent application EP 0 298 836 relates to an optical fibre cable comprising an inner sheath containing at least one optical fibre member, and an outer sheath containing the inner sheath. An intermediate sheath may be provided between the inner and outer sheaths. The inner sheath is in direct contact with the optical fibres and surrounds said optical fibres completely.

US patent application US 2002/0188520 relates to an optical fibre whose core is surrounded by a cladding, which cladding is in turn surrounded by a coating material that adheres to the cladding. It is also possible to coat the cladding with two or more layers of coating material.

The object of the present invention is thus to provide an optical fibre unit in which it is no longer necessary to use gel-like materials in the interior of the optical fibre unit.

Another object of the present invention is to provide an optical fibre unit from which the outer cladding can be removed over a length of at least 100 cm without causing damage to the optical fibre itself, in particular to the protective coating that surrounds the optical fibre.

The optical fibre unit as referred to in the introduction is characterised by the characterizing portion of claim 1.

One or more of the above objects can be accomplished by using such a radial intermediate space. It is in particular preferable for the anti-adhesive coating to be composed of a UV-curable resin, in particular an acrylate-based resin comprising reactive silicone groups. An adhesive of this type bonds well to the protective coating that is already present and, in addition, prevents the surrounding buffer tube from adhering to the anti-adhesive coating. In addition to that, an adhesive of this kind can be applied to the circumference of an optical fibre in a quick and simple manner. In a special embodiment, the anti-adhesive coating can be selected from the group consisting of thermosetting resins and electron beam curing resins.

To make an optical fibre unit thus configured resistant to the influence of moisture from outside, the radial intermediate space is preferably provided with a material that will swell in the presence of water, such as a superabsorbent polymer, for example in the form of a powder.

The buffer tube is made of a thermoplastic material having a high tensile strength, a low shrinkage and a low linear coefficient of expansion. Examples of thermoplastic materials are polyolefins, like polyethylene and polypropylene, e.g. linear low density polyethylene (LLDPE), high density polyethylene (HDPE). A preferred material is a thermoplastic elastomer having flexible diol segments.

The optical fibre made of glass, whose light-conducting core may be provided with dopants that influence the refractive index profile and whose outer surface is usually provided with a protective coating, which protective coating generally consists of two separate layers, with the first layer being in direct contact with the glass surface and the second layer surrounding the first layer, is preferably provided with the present anti-adhesive coating in a coating process. The term "protective coating" is to be understood to mean protective coatings which may consist of one or more sublayers. In such a coating process, the optical fibre, which is already provided with one ore more protective coatings, is passed through a so-called coating applicator, in which the anti-adhesive coating composition is present, after which the optical fibre is passed through a so-called curing station. Examples of such curing stations are UV ovens, heating ovens and electron beam chambers, depending on the type of anti-adhesive coating to be cured. Such ovens may be made up of several, separate ovens arranged in series. Said coating and curing of the anti-adhesive coating preferably takes place off-line, viz. In a step separately from the fibre drawing process. The application of the protective coating usually takes place on-line, viz. during the fibre drawing process. The anti-adhesive coating is preferably provided round the optical fibre with a tight fit. Once the anti-adhesive coating has been provided, one ore more optical fibres provided with such an anti-adhesive coating are placed in a buffer tube, preferably by extruding the buffer tube over the optical fibres thus produced, and one or more of the present optical fibre units, viz. the buffer tube with the optical fibres arranged therein, are joined into a cable. In a specific embodiment, the protective coating of the optical fibre, in particular the second layer thereof, is coloured so as to make it possible to identify optical fibres, in which case it is preferable to use a non-coloured or transparent anti-adhesive coating in combination with a non-coloured or transparent buffer tube. Identification of the local fibre is thus very easy, because the coloured protective coating of the optical fibre is visible through the anti-adheslve coating and the buffer tube. The aforesaid buffer tube surrounds one or more optical fibre units, therefore, whether or not in a loose or a tight configuration.

In another embodiment it is also possible to give the anti-adhesive coating a colour by adding pigments or colourants to the anti-adhesive coating, which colour can be provided in separate rings but also in stripes or lines along the entire length of the optical fibre. According to the invention the thickness of the anti-adhesive coating ranges between 1 and 10 µm.

The present invention further relates to an optical cable comprising one or more optical fibre units according to the present invention, which optical fibre units may be contained in a dimensionally stable tube, in which dimensionally stable tube the optical fibre units are preferably freely movable. If such a dimensionally stable tube containing the present optical fibre units is used, one or more dimensionally stable tubes will be surrounded by a cable sheath. It will be understood that in such a cable the dimensionally stable tubes may be "empty" as well as filled with one or more optical fibre units. In another embodiment, the present optical fibre units, which may or may not be contained in a dimensionally stable tube, are wound round a central strengthening element, whilst the optical fibre units, or the dimensionally stable tubes in question, are in turn surrounded by an outer cladding.

The present invention further relates to a method for manufacturing the present optical fibre unit, wherein an optical fibre, which is already provided with a protective coating, which may be composed of one or more sublayers, is provided with an anti-adhesive coating, which anti-adhesive coating is provided with a buffer tube by means of an extrusion process, wherein the extrusion of the buffer tube is carried out in such a manner that the extruded buffer tube will be dimensionally stable and that it is ensured that a radial intermediate space will be present between the optical fibre provided with an anti-adhesive coating and the inner circumference of the buffer tube that has been extruded over said optical fibre. The application of the anti-adhesive coating can take place by passing the fibre through a bath of a liquid adhesive and subsequently curing said adhesive, preferably by UV radiation, heating and/or electron beam radiation. In the embodiment in which the buffer tube is extruded over only one optical fibre, the dimension of the radial intermediate space preferably ranges between 3 and 100 µm, in the embodiment in which the buffer tube is extruded over a bundle consisting of a plurality of optical fibres, each provided with a protective coating and a surrounding anti-adhesive coating, the dimension of the radial intermediate space between the inner circumference of the buffer tube and an imaginary circle round said bundle of optical fibres is at least 100 µm.

Using the present invention, which does not use gel-like materials in the radial intermediate space, the time required for making connections between the optical fibre units will be reduced by about 20-30% in comparison with optical fibre units in which gel-like materials are used. According to the present method it is moreover possible to significantly increase the extrusion rate that is used in the production of the present optical fibre units in comparison with the extrusion rate that is achieved when gel-like materials are used. In addition to that it has been found that the use of a buffer tube in the present construction of the optical fibre unit makes it possible to remove the buffer tube over a length of at least 100 cm, in particular at least 200 cm, more in particular 500 cm, without damaging the protective coating of the optical fibre.

The present invention will now be explained by means of an example, in which connection it should be noted, however, that the present invention is by no means limited to such a special example.

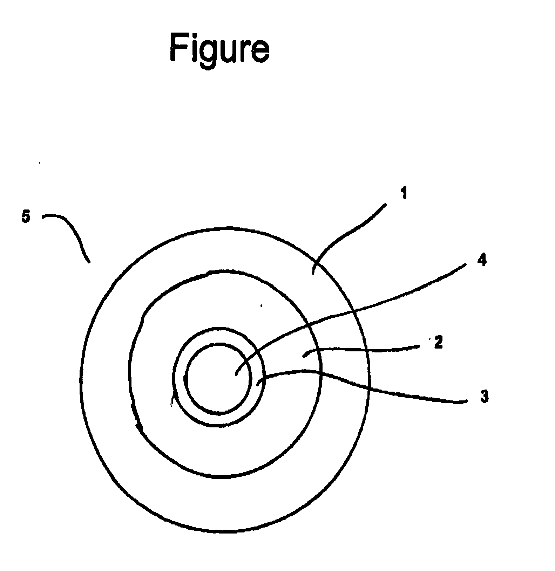

In the appended figure, the present optical fibre unit (indicated by numeral 5) is schematically shown in cross-sectlonal view. The optical fibre 4, which may be provided with one or more protective coatings (not shown), is surrounded by an anti-adhesive layer 3, which anti-adhesive layer 3 is at least partially bonded to the outer circumference of optical fibre 4. The anti-adhesive layer 3 is surrounded by a buffer tube 1, whilst an intermediate space 2 is present between the inner circumference of the buffer tube 1 and the anti-adhesive 3. One or more of such optical fibre units may be arranged in a dimensionally stable tube (not shown), which dimensionally stable tube may in turn be wound round a central strengthening element, after which an outer jacket may be provided round the outer circumference of such dimensionally stable tubes, which outer jacket may consist of one or more individual layers. It is also possible to strand one or more of such optical fibre units directly round a central strengthening element, after which an outer jacket, which may consist of one ore more individual layers, may be provided round the outer circumference of such fibre units, Yarns, rip cords and/or thin metal films may be present between the strengthening element and the surrounding fibre units and/or dimensionally stable tubes.

## Claims

1. An optical fibre unit (5), comprising:
at least one optical fibre (4), which optical fibre is provided with a protective coating,
an anti-adhesive coating (3), which anti-adhesive coating (3) surrounds the protective coating and is substantially bonded thereto, and
a buffer tube (1) which surrounds the at least one optical fibre (4) provided with said anti-adhesive coating (3), whilst a radial intermediate space (2) is present between the anti-adhesive coating (3) and the inner circumference of the buffer tube (1), **characterized in that** the inner circumference of the buffer tube (1) and the outer circumference of the anti-adhesive coating (3) have a circular cross-section, wherein the thickness of the anti-adhesive coating (3) is 1-10 µm.

2. An optical fibre unit (5) according to claim 1, **characterised in that** no gel-like materials are present in the region (2) between the anti-adhesive coating (3) and the buffer tube (1).

3. An optical fibre (5) unit according to claims 2, **characterised in that** a superabsorbent polymer is present in the region (2) between the anti-adhesive coating (3) and the buffer tube (1).

4. An optical fibre unit (5) according to any one or more of the preceding claims, **characterised in that** the anti-adhesive coating (3) is made of a UV-curable resin.

5. An optical fibre unit (5) according to claim 4, **characterised in that** the anti-adhesive layer (3) comprises reactive silicone groups.

6. An optical fibre (5) unit according to any one or more of the preceding claims, **characterised in that** the anti-adhesive coating (3) comprises pigments or colourants.

7. An optical fibre unit (5) according to any one or more of the preceding claims, **characterised in that** the dimension of the radial intermediate space (2) is at least 3 µm.

8. An optical fibre unit (5) according to any one or more of the preceding claims, **characterised in that** if a bundle of a number of optical fibres (4), each consisting of a protective coating and a surrounding anti-adhesive coating (3) is present within the buffer tube (1), the dimension of the radial intermediate space between the anti-adhesive coating (3) of the outer optical fibres (4) of said bundle of optical fibres (4) and the inner circumference of the buffer tube (1) that surrounds the bundle is at least 100 µm.

9. An optical fibre unit (5) according to any one or more of the preceding claims, **characterised in that** the buffer tube (1) is made of a thermoplastic elastomer having flexible diol segments.

10. An optical cable comprising a sheath that surrounds one or more optical fibre units (5) according to any one or more of the preceding claims.

11. An optical cable In which one or more optical fibre units (5) according to any one or more of the preceding claims are arranged in a dimensionally stable tube that surrounds the optical fibre unite (5), in such a manner as to be freely movable therein, wherein one or more of such dimensionally stable tubes are surrounded by an outer jacket.

12. An optical cable according to claim 11, **characterised in that** said one or more dimensionally stable tubes are wound round a central strengthening element, whilst the assembly thus obtained is surrounded by an outer jacket.

13. An optical fibre unit according to any one or more of the claims 1-10, **characterised In that** the buffer tube (1) can be removed over a length of at least 100 cm, preferably 200 cm, without the protective coating of the optical fibre being damaged.

14. A method for manufacturing an optical fibre unit, comprising the application of an anti-adhesive coating (3) to at least one optical fibre (4) provided with a protective coating and the subsequent extrusion of a buffer tube (1) over said optical fibre (4) provided with the aforesaid anti-adhesive coating (3) wherein the extrusion of the buffer tubers carried out in such a manner that a radial intermediate space (2) will be present between anti-adhesive coating (3) and the inner circumference of the buffer tube (1), **characterized in that** the inner circumference of the buffer tube (1) and the outer circumference of the anti-adhesive coating (3) have a circular cross-section, wherein the thickness of the anti-adhesive coating (3) is 1-10 µm.

15. A method according to claim 14, **characterised in that** the application of the anti-adhesive coating (3) takes place by passing the optical fibre (4) through a bath of a liquid adhesive and subjecting the fibre (4) thus provided with an anti-adhesive coating (5) to a curing reaction.

16. A method according to claim 15, **characterised in that** said curing reaction comprises irradiation with UV radiation.

17. A method according to any one or more of the claims 14-16, **characterised in that** the dimension of said radial intermediate spacer (2) is at least 3 µm when the buffer tuber (1) is extruded over one optical fibre (1).

18. A method according to any one or more of the claims 14-17. **characterised in that** the dimension of said radial intermediate space (2) is at least 100 µm when the buffer tube (1) is extruded over a number of optical fibres (4).

## Patentansprüche

1. Glasfaserbaugruppe (5) mit:
wenigstens einer Glasfaser (4), die mit einer Schutzbeschichtung versehen ist,
einer Antihaftbeschichtung (3), die die Schutzbeschichtung umgibt und die im Wesentlichen mit dieser verbunden ist, und
einer Pufferröhre (1), die die wenigstens eine mit der Antihaftbeschichtung (3) versehene Glasfaser (4) umgibt, während ein radialer Zwischenraum (2) zwischen der Antihaftbeschichtung (3) und dem Innenumfang der Pufferröhre (1) vorhanden ist,
**dadurch gekennzeichnet, dass** der Innenumfang der Pufferröhre (1) und der Außenumfang der Antihaftbeschichtung (3) einen kreisförmigen Querschnitt haben, wobei die Dicke der Antihaftbeschichtung (3) 1 bis 10 µm ist.

2. Glasfaserbaugruppe (5) nach Anspruch 1, **dadurch gekennzeichnet, dass** kein gelähnliches Material im Bereich (2) zwischen der Antihaftbeschichtung (3) und der Pufferröhre (1) vorhanden ist.

3. Glasfaserbaugruppe (5) nach Anspruch 2, **dadurch gekennzeichnet, dass** ein superabsorbierendes Polymer im Bereich (2) zwischen der Antihaftbeschichtung (3) und der Pufferröhre (1) vorhanden ist.

4. Glasfaserbaugruppe (5) nach einem oder mehreren der vorhergehenden Ansprüche, **dadurch gekennzeichnet, dass** die Antihaftbeschichtung (3) aus einem UV-aushärtenden Harz hergestellt ist.

5. Glasfaserbaugruppe (5) nach Anspruch 4, **dadurch gekennzeichnet, dass** die Antihaftbeschichtung (3) eine reaktive Silikongruppe enthält.

6. Glasfaserbaugruppe (5) nach einem oder mehreren der vorhergehenden Ansprüche, **dadurch gekennzeichnet, dass** die Antihaftbeschichtung (3) Pigmente oder Farbstoffe enthält.

7. Glasfaserbaugruppe (5) nach einem oder mehreren der vorhergehenden Ansprüche, **dadurch gekennzeichnet, dass** die Abmessung des radialen Zwischenraums (2) wenigstens 3 µm ist.

8. Glasfaserbaugruppe (5) nach einem oder mehreren der vorhergehenden Ansprüche, **dadurch gekennzeichnet, dass**, wenn ein Bündel mehrerer Glasfasern (4), die jeweils eine Schutzbeschichtung und eine umgebende Antihaftbeschichtung (3) enthalten, in einer Pufferröhre (1) vorhanden ist, die Abmessung des radialen Zwischenraums zwischen der Antihaftbeschichtung (3) der äußeren Glasfasern (4) des Bündels von Glasfasern (4) und dem Innenumfang der Pufferröhre (1), die das Bündel umgibt, wenigstens 100 µm ist.

9. Glasfaserbaugruppe (5) nach einem oder mehreren der vorhergehenden Ansprüche, **dadurch gekennzeichnet, dass** die Pufferröhre (1) aus einem thermoplastischen Elastomer mit flexiblen Diolabschnitten hergestellt ist.

10. Glasfaserkabel mit einer Hülle, die eine oder mehrere Glasfaserbaugruppen (5) nach einem oder mehreren der vorhergehenden Ansprüche umgibt.

11. Glasfaserkabel in dem eine oder mehrere Glasfaserbaugruppen (5) nach einem oder mehreren der vorhergehenden Ansprüche in einer formbeständigen Röhre angeordnet sind, die die Glasfaserbaugruppen derart umgibt (5), dass sie darin frei beweglich sind, wobei eine oder mehrere dieser formbeständigen Röhren von einem Außenmantel umgeben sind.

12. Glasfaserkabel nach Anspruch 11, **dadurch gekennzeichnet, dass** die eine oder die mehreren formbeständigen Röhren um ein zentrales Verstärkungselement gewunden sind, während die auf diese Weise erhaltene Anordnung von einem Außenmantel umgeben ist.

13. Glasfaserbaugruppe nach einem oder mehreren der Ansprüche 1 bis 10, **dadurch gekennzeichnet, dass** die Pufferröhre (1) über eine Länge von wenigstens 100 cm, vorzugweise 200 cm, entfernt werden kann, ohne dass die Schutzbeschichtung der Glasfaser beschädigt wird.

14. Verfahren zur Herstellung einer Glasfaserbaugruppe, welches das Aufbringen einer Antihaftbeschichtung (3) auf wenigstens einer mit einer Schutzbeschichtung versehenen Glasfaser (4) umfasst und das anschließende Strangpressen einer Pufferröhre (1) um die mit der Antihaftbeschichtung (3) versehene Glasfaser (4), wobei das Strangpressen der Pufferröhre (1) so durchgeführt wird, dass ein radialer Zwischenraum (2) zwischen der Antihaftbeschichtung (3) und dem Innenumfang der Pufferröhre (1) vorhanden ist, **dadurch gekennzeichnet, dass** der Innenumfang der Pufferröhre (1) und der Außenumfang der Antihaftbeschichtung (3) einen kreisförmigen Querschnitt haben, wobei die Dicke der Antihaftbeschichtung (3) 1 bis 10 µm ist.

15. Verfahren nach Anspruch 14, **dadurch gekennzeichnet, dass** das Aufbringen der Antihaftbeschichtung (3) dadurch erfolgt, dass die Glasfaser (4) durch ein Bad aus einem flüssigen Haftmittel geführt und die dadurch mit einer Antihaftbeschichtung (3) versehene Faser (4) einer Aushärtungsreaktion unterzogen wird.

16. Verfahren nach Anspruch 15, **dadurch gekennzeichnet, dass** die Aushärtungsreaktion eine Bestrahlung mit UV-Strahlung umfasst.

17. Verfahren nach einem oder mehreren der Ansprüche 14 bis 16, **dadurch gekennzeichnet, dass** die Abmessung des radialen Zwischenraums (2) wenigstens 3 µm ist, wenn die Pufferröhre (1) um die Glasfaser (4) stranggepresst wird.

18. Verfahren nach einem oder mehreren der Ansprüche 14 bis 17, **dadurch gekennzeichnet, dass** die Abmessung des radialen Zwischenraums (2) wenigstens 100 µm ist, wenn die Pufferröhre (1) um mehrere Glasfasern (4) stranggepresst wird.

## Revendications

1. Unité à fibre optique (5), comprenant :
au moins une fibre optique (4), laquelle fibre optique est pourvue d'un revêtement protecteur,
un revêtement antiadhésif (3), lequel revêtement antiadhésif (3) entoure le revêtement protecteur auquel il est sensiblement lié, et
un tube tampon (1) qui entoure l'au moins une fibre optique (4) pourvue dudit revêtement antiadhésif (3), dans laquelle un espace intermédiaire radial (2) est présent entre le revêtement antiadhésif (3) et la circonférence intérieure du tube tampon (1), **caractérisée en ce que** la circonférence intérieure du tube tampon (1) et la circonférence extérieure du revêtement antiadhésif (3) ont une coupe transversale circulaire, dans lequel l'épaisseur du revêtement antiadhésif (3) est de 1 à 10 µm.

2. Unité à fibre optique (5) selon la revendication 1, caractérisée en ce qui il n'y a pas de gel dans la région (2) entre le revêtement antiadhésif (3) et le tube tampon (1).

3. Unité à fibre optique (5) selon la revendication 2, **caractérisée en ce qu'**un polymère super-absorbant est présent dans la région (2) entre le revêtement antiadhésif (3) et le tube tampon (1).

4. Unité à fibre optique (5) selon l'une quelconque des revendications précédentes, **caractérisée en ce que** le revêtement antiadhésif (3) est constitué d'une résine durcissable par UV.

5. Unité à fibre optique (5) selon la revendication 4, **caractérisée en ce que** la couche antiadhésive (3) comprend des groupes de silicones réactives.

6. Unité à fibre optique (5) selon l'une quelconque des revendications précédentes, **caractérisée en ce que** le revêtement antiadhésif (3) comprend des pigments ou des colorants.

7. Unité à fibre optique (5) selon l'une quelconque des revendications précédentes, **caractérisée en ce que** la dimension de l'espace intermédiaire radial (3) est d'au moins 3 µm.

8. Unité à fibre optique (5) selon l'une quelconque des revendications précédentes, **caractérisée en ce que**, si un faisceau d'un nombre de fibres optiques (4), se composant chacune d'un revêtement protecteur et d'un revêtement antiadhésif (3) l'entourant, est présent à l'intérieur du tube tampon (1), la dimension de l'espace intermédiaire radial entre le revêtement antiadhésif (3) des fibres optiques extérieures (4) dudit faisceau de fibres optiques (4) et la circonférence intérieure du tube tampon (1) qui entoure le faisceau est d'au moins 100 µm.

9. Unité à fibre optique (5) selon l'une quelconque des revendications précédentes, **caractérisée en ce que** le tube tampon (1) est constitué d'un élastomère thermoplastique ayant des segments de diol flexibles.

10. Câble optique comprenant une gaine qui entoure une ou plusieurs unités à fibre optique (5) selon l'une quelconque des revendications précédentes.

11. Câble optique dans lequel une ou plusieurs unités à fibre optique (5) selon l'une quelconque des revendications précédentes sont agencées dans un tube aux dimensions stables qui entoure les unités à fibre optique (5) de manière à ce qu'elles puissent être librement déplacées à l'intérieur de celui-ci, dans lequel un ou plusieurs desdits tubes aux dimensions stables sont entourés d'une chemise extérieure.

12. Câble optique selon la revendication 11, **caractérisé en ce que** lesdits un ou plusieurs tubes aux dimensions stables sont enroulés autour d'un élément central de renforcement, dans lequel l'ensemble ainsi obtenu est entouré d'une chemise extérieure.

13. Unité à fibre optique selon l'une quelconque des revendications 1 à 10, **caractérisée en ce que** le tube tampon (1) peut être enlevé sur une longueur d'au moins 100 cm, de préférence 200 cm, sans que le revêtement protecteur de la fibre optique ne soit endommagé.

14. Procédé de fabrication d'une unité à fibre optique, comprenant l'application d'un revêtement antiadhésif (3) sur au moins une fibre optique (4) pourvue d'un revêtement protecteur et l'extrusion subséquente d'un tube tampon (1) sur ladite fibre optique (4) pourvue dudit revêtement antiadhésif (3), dans lequel l'extrusion du tube tampon (1) est effectuée de manière à ce qu'un espace intermédiaire radial (2) soit présent entre le revêtement antiadhésif (3) et la circonférence intérieure du tube tampon (1), **caractérisé en ce que** la circonférence intérieure du tube tampon (1) et la circonférence extérieure du revêtement antiadhésif (3) ont une coupe transversale circulaire, dans lequel l'épaisseur du revêtement antiadhésif (3) est de 1 à 10 µm.

15. Procédé selon la revendication 14, **caractérisé en ce que** l'application du revêtement antiadhésif (3) se déroule en faisant passer la fibre optique (4) à travers un bain d'un adhésif liquide et en soumettant la fibre (4) ainsi pourvue d'un revêtement adhésif (5) à une réaction de durcissement.

16. Procédé selon la revendication 15, **caractérisé en ce que** ladite réaction de durcissement comprend l'irradiation par un rayonnement ultraviolet.

17. Procédé selon l'une quelconque des revendications 14 à 16, **caractérisé en ce que** la dimension dudit espace intermédiaire radial (2) est d'au moins 3 µm lorsque le tube tampon (1) est extrudé sur une fibre optique (4).

18. Procédé selon l'une quelconque des revendications 14 à 17, **caractérisé en ce que** la dimension dudit espace intermédiaire radial (2) est d'au moins 100 µm lorsque le tube tampon (1) est extrudé sur un nombre de fibres optiques (4).
